# EUROPEAN PATENT SPECIFICATION

(11) **EP 3 916 913 B1**
(45) Date of publication and mention of the grant of the patent: **13.11.2024**
(21) Application number: 21172296.2
(22) Date of filing: 05.05.2021
(51) Int. Cl.: H01Q 3/26, H04B 17/12, H04B 17/21

(54) **CALIBRATION DEVICE, BASE STATION ANTENNA AND A COMMUNICATION ASSEMBLY**
KALIBRIERVORRICHTUNG, BASISSTATIONSANTENNE UND KOMMUNIKATIONSANORDNUNG
DISPOSITIF D'ÉTALONNAGE, ANTENNE DE STATION DE BASE ET ENSEMBLE DE COMMUNICATION

(30) Priority: 28.05.2020 CN 202010466000
(43) Date of publication of application: 01.12.2021
(73) Proprietor: Outdoor Wireless Networks LLC, North Carolina 28610 (US)
(72) Inventor: ZHANG, Xun, Suzhou, 215021 (CN); WEN, Hangsheng, Suzhou, 215021 (CN)
(74) Representative: Meissner Bolte Partnerschaft mbB

(56) References cited:
- CN-A- 102 055 506
- CN-A- 107 342 827

## Description

### CROSS-REFERENCE TO RELATED APPLICATION

The present application claims priority to Chinese Patent Application No. 202010466000.6, filed May 28, 2020.

### FIELD

The present invention generally relates to radio communications and, more particularly, to a calibration device, a base station antenna and a communication assembly.

### BACKGROUND

Cellular communications systems are well known in the art. In a cellular communications system, a geographic area is divided into a series of regions that are referred to as "cells" which are served by respective base stations. Each base station may include one or more base station antennas that are configured to provide two-way radio frequency ("RF") communications with mobile subscribers that are within the cell served by the base station.

In many cases, each base station is divided into "sectors". In perhaps the most common configuration, a hexagonally shaped cell is divided into three 120° sectors, and each sector is served by one or more base station antennas that have an azimuth Half Power Beam width (HPBW) of approximately 65°. Typically, the base station antennas are mounted on a tower structure, with the radiation patterns (also referred to herein as "antenna beams") that are generated by the base station antennas directed outwardly. Base station antennas are often implemented as linear or planar phased arrays of radiating elements.

Due to the growing demand for wireless communications, multi-band technology, Multiple-Input Multiple-Output (MIMO) technology, and beamforming technology have been rapidly developed to support different services and high throughput data transmission. However, with the integration of more and more frequency bands and/or RF ports in one base station antenna, the antenna system such as the feed network and the calibration network become more complicated and more sensitive to interference. Therefore, how to achieve high anti-interference performance of the antenna system at reasonable cost has been a technical problem urgently to be solved by those skilled in the art.

Cited art given in CN 107 342 827 discloses a calibration network of an antenna array. The calibration network comprises a first dielectric substrate layer and a second dielectric substrate layer that are laminated; band type line circuits are arranged between the first dielectric substrate layer and the second dielectric substrate layer; microstrip line circuits are arranged at the surface of one side, far away from of the second dielectric substrate layer, of the first dielectric substrate layer; and more than one band type line circuit and more than one microstrip line circuit are arranged, wherein the number of the band type line circuits is identical with that of the microstrip line circuits. One band type line circuit and one microstrip line circuit are connected to form one calibration circuit. In each calibration circuit, the band type line circuit consists of one power combiner and more than two directional couplers; the microstrip line circuit includes more than two amplitude modulators, wherein the number of the amplitude modulators is identical with that of the directional couplers; and each amplitude regulator is connected between a coupling terminal of one directional coupler and an input terminal of the power combiner.

CN 102 055 506 discloses a time division-synchronization code division multiple access (TD-SCDMA) and time division-long term evolution (TD-LTE) intelligent antenna multi-channel broadband calibration network. The multi-channel broadband calibration network is characterized in that: a micro-strip coplanar waveguide structure is adopted; the two ends of a coupling line of a coupler are loaded with crossed coupling lines; and a metal shield box is eliminated. An entire structure comprises a plurality of power dividers, a plurality of directional couplers and an installation plate, wherein each power divider and each directional coupler adopt micro-strip coplanar waveguide structures; crossed coupling lines are loaded between coupling lines of each directional coupler; a radiofrequency cable core is welded with each directional coupler through a through hole on the installation plate and a metallized via hole on the directional coupler; the sheath of a cable is welded with a back face grounding layer; one side, in the same direction as an antenna, of the installation plate is provided with a metal flange; and the installation plate is arranged on an antenna bottom plate. The network has the advantages of high electric index, simple structure and contribution to mass production.

### SUMMARY

According to a first aspect of the present invention, there is a calibration device for an antenna provided according to claim 1. The calibration device comprises a dielectric substrate and a metal pattern printed on the dielectric substrate, wherein the metal pattern includes at least a portion of a calibration circuit, wherein a first portion of the calibration circuit is provided on a first major surface of the dielectric substrate, a second portion of the calibration circuit is provided on a second major surface of the dielectric substrate opposite the first major surface, and the first portion and/or the second portion of the calibration circuit are/is constructed as coplanar waveguide transmission lines. Therefore, a high anti-interference performance of the antenna system can be achieved at reasonable cost.

The first portion of the calibration circuit at least includes a radio frequency (RF) port and/or a coupler.

The second portion of the calibration circuit at least includes a calibration port and/or a power combiner.

The first portion of the calibration circuit comprises a plurality of first conductive traces and the second portion of the calibration circuit comprises a plurality of second conductive traces, and the metal pattern further includes a first coplanar ground area printed on both sides of at least some of the first conductive traces and a second coplanar ground area printed on both sides of at least some of the second conductive traces.

In some embodiments, the first coplanar ground area is spaced apart from the first conductive traces by a first slot, in which metallization is removed, and the second coplanar ground area is spaced apart from the second conductive traces by a second slot, in which metallization is removed.

In some embodiments, with reference to a direction perpendicular to the first major surface of the dielectric substrate, the first portion of the calibration circuit is directly above at least a portion of the second coplanar ground area, and/or the second portion of the calibration circuit is directly below at least a portion of the first coplanar ground area.

In some embodiments, the first portion of the calibration circuit and/or the second portion of the calibration circuit are/is at least partially configured as coplanar waveguide transmission lines with back metallization.

In some embodiments, the first slot has a width between 0.1 mm and 1 mm, and the second slot has a width between 0.1 mm and 1 mm.

In some embodiments, the first portion of the calibration circuit is electrically connected to the second portion of the calibration circuit by means of a first conductive structure.

In some embodiments, the first conductive structure includes a via or a metal conductor.

In some embodiments, the first coplanar ground area is electrically connected to the second coplanar ground area by means of a second conductive structure.

In some embodiments, the second conductive structure includes a via or a metal conductor.

According to a second aspect of the present invention, there is a base station antenna provided according to claim 10. The base station antenna comprises a reflector, a calibration device according to any of claims 1 to 9 and a baseplate, wherein an antenna array is provided on the front side of the reflector, the calibration device and the baseplate are provided on the rear side of the reflector, and the calibration device is mounted on the baseplate.

In some embodiments, the baseplate is provided with a groove, in which metal is removed, wherein the first portion of the calibration circuit falls within the range of the groove to avoid direct electrical contact between the first portion of the calibration circuit and the baseplate.

In some embodiments, the calibration device is configured as a single-layer printed circuit board including only one dielectric substrate between the first portion and the second portion of the calibration circuit.

### BRIEF DESCRIPTION OF THE DRAWING

FIG. 1 is a schematic top view showing a communication assembly according to some embodiments of the present invention, the communication assembly including a base station antenna according to some embodiments of the present invention and an integrated RRU.
FIG. 2 is a schematic partial sectional view of a calibration device according to some embodiments of the present invention in the base station antenna of FIG. 1.
FIG. 3 is a simplified schematic view showing a first portion of a calibration circuit on the calibration device of FIG. 2.
FIG. 4 is a simplified schematic view showing a second portion of the calibration circuit on the calibration device of FIG. 2.
FIG. 5 is an enlarged partial schematic view showing the first portion of the calibration circuit in FIG. 3.
FIG. 6 is a partial schematic view showing the second portion of the calibration circuit in FIG. 4.

### DETAILED DESCRIPTION

The present invention will be described below with reference to the drawings, in which several embodiments of the present invention are shown. The invention is specifically defined by the attached claims. It should be understood, however, that the present invention may be implemented in many different ways, and is not limited to the example embodiments described below. In fact, the embodiments described hereinafter are intended to make a more complete disclosure of the present invention and to adequately explain the scope of the present invention to a person skilled in the art. The embodiments disclosed herein can be combined in various ways to provide many additional embodiments.

The wording in the specification is only used for describing particular embodiments and is not intended to limit the present invention. All the terms used in the specification (including technical and scientific terms) have the meanings as normally understood by a person skilled in the art, unless otherwise defined. For the sake of conciseness and/or clarity, well-known functions or constructions may not be described in detail.

In the specification, when an element is referred to as being "on", "attached" to, "connected" to, "coupled" with, "contacting", etc., another element, it can be directly on, attached to, connected to, coupled with or contacting the other element or intervening elements may also be present. In contrast, when an element is referred to as being "directly on", "directly attached" to, "directly connected" to, "directly coupled" with or "directly contacting" another element, there are no intervening elements present. In the specification, references to a feature that is disposed "adjacent" another feature may have portions that overlap, overlie or underlie the adjacent feature.

In the specification, words describing spatial relationships such as "up", "down", "left", "right", "forth", "back", "high", "low" and the like may describe a relation of one feature to another feature in the drawings. It should be understood that these terms also encompass different orientations of the apparatus in use or operation, in addition to encompassing the orientations shown in the drawings. For example, when the apparatus in the drawings is turned over, the features previously described as being "below" other features may be described to be "above" other features at this time. The apparatus may also be otherwise oriented (rotated 90 degrees or at other orientations) and the relative spatial relationships will be correspondingly altered.

The term "A or B" used through the specification refers to "A and B" and "A or B" rather than meaning that A and B are exclusive, unless otherwise specified.

The term "schematically" or "exemplary", as used herein, means "serving as an example, instance, or illustration", rather than as a "model" that would be exactly duplicated. Any implementation described herein as exemplary is not necessarily to be construed as preferred or advantageous over other implementations.

Herein, the term "substantially", is intended to encompass any slight variations due to design or manufacturing imperfections, device or component tolerances, environmental effects and/or other factors.

In this context, the term "at least a portion" may be a portion of any proportion, for example, may be greater than 10%, 20%, 30%, 40%, 50%, 60%, 70%, 80%, 90%, or even 100%.

In addition, certain terminology, such as the terms "first", "second" and the like, may also be used in the following description for the purpose of reference only, and thus are not intended to be limiting. For example, the terms "first", "second" and other such numerical terms referring to structures or elements do not imply a sequence or order unless clearly indicated by the context.

Further, it should be noted that, the terms "comprise/include", as used herein, specify the presence of stated features, steps, operations, elements, and/or components, but do not preclude the presence or addition of one or more other features, steps, operations, elements, components, and/or groups thereof.

Embodiments of the present invention will now be described in more detail with reference to the accompanying drawings.

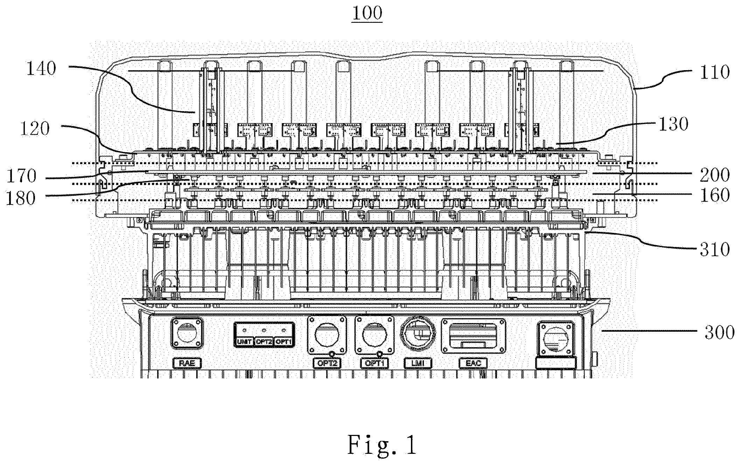

FIG. 1 is a schematic top view of a communication assembly according to some embodiments of the present invention. As shown in FIG. 1, the communication assembly includes a base station antenna and an integrated RRU. The base station antenna 100 may be mounted on a raised structure, such as an antenna tower or the like, with its longitudinal axis extending substantially perpendicular to the ground for convenient operation. The base station antenna 100 includes a radome 110 that provides environmental protection and a reflector 120. The reflector 120 may include a metal surface that provides a ground plane and reflects electromagnetic waves reaching it, for example, the metal surface redirects the electromagnetic waves for forward propagation. The base station antenna 100 further includes a feed board 130 disposed on a front side of the reflector 120. An antenna array 140 and its feeding circuits may be integrated on the feed board 130 in some embodiments. In other embodiments, a plurality of feed boards 130 may be provided and subsets of radiating elements of the antenna array 140 are mounted on the respective feed boards 130. The base station antenna 100 further includes mechanical and electronic components, such as a connector, a cable, a phase shifter, a remote electronic tilt (RET) unit, a duplexer, a calibration device 200, a filter 160 and the like, which may be disposed on a rear side of the reflector 120. In addition, a remote radio unit (RRU) 300 may be integrated outside the base station antenna 100, for example, installed on the rear side of the base station antenna 100.

In some types of the base station antennas 100, such as beamforming antennas, due to uncontrollable errors in the design, manufacture or use of RF control systems (such as the RRU 300) or the antenna feed networks, a calibration device 200 is typically required to compensate for the phase offsets and/or amplitude offsets of the RF signals that are input at different RF ports. This process is often referred to as "calibration."

The calibration device 200 may be configured as a printed circuit board that may be separate from the feed board 130. Typically, with the structural strength taken into account, the calibration device 200 needs to be mounted on a baseplate 170, which may be a plate in any suitable form, such as a metal plate. For the purpose of calibration, the calibration device 200 and the RRU 300 may bi-directionally transmit RF signals by, for example, a known coaxial connection device 180, which may be a coaxial connector or a coaxial cable.

A calibration device may include a dielectric substrate, a microstrip calibration circuit disposed on a first major surface of the dielectric substrate, and a ground metal layer disposed on a second major surface of the dielectric substrate. However, as more and more frequency bands and/or RF ports are integrated in the base station antenna, for example, from 8x8 MIMO (8R8T) to 64x64 MIMO (64R64T), the calibration device 200 becomes more sensitive to external interference signals, which may be noise signals coming from surrounding environments, and may also be RF signals reflected back from metal components near or within the base station antenna 100. As the calibration device 200 is disposed adjacent the RRU 300 which has a metal housing 310, the RF signal emitted from the calibration device 200 tend to be reflected by the metal housing 310 back to the calibration device 200. Such reflected signals can interfere with a calibration circuit 220 in the calibration device 200.

In order to improve the anti-interference performance of the calibration device, the calibration circuit of a conventional calibration device may be designed as a stripline network. For this purpose, the conventional calibration device may be implemented as a multilayer printed circuit board including at least two dielectric substrates, wherein a first ground metal layer may be disposed on an upper surface of the upper dielectric substrate, a second ground metal layer may be disposed on a lower surface of the lower dielectric substrate, and the calibration circuit is provided in a metal layer between the two dielectric substrates. As a result, the calibration circuit is surrounded by the first and second ground metal layers, and may thus constitute a stripline network. The stripline network may be advantageous in that it can reduce losses of radiation signals and shield RF transmission lines from external radiation. However, the stripline network also has some disadvantages: First, it is complex to manufacture a stripline based calibration circuit. Second the cost is high. Third, it is difficult to tune the RF performance of the calibration circuit. Therefore, how to achieve high anti-interference performance of the antenna system at reasonable cost has been a technical problem urgently to be solved by those skilled in the art.

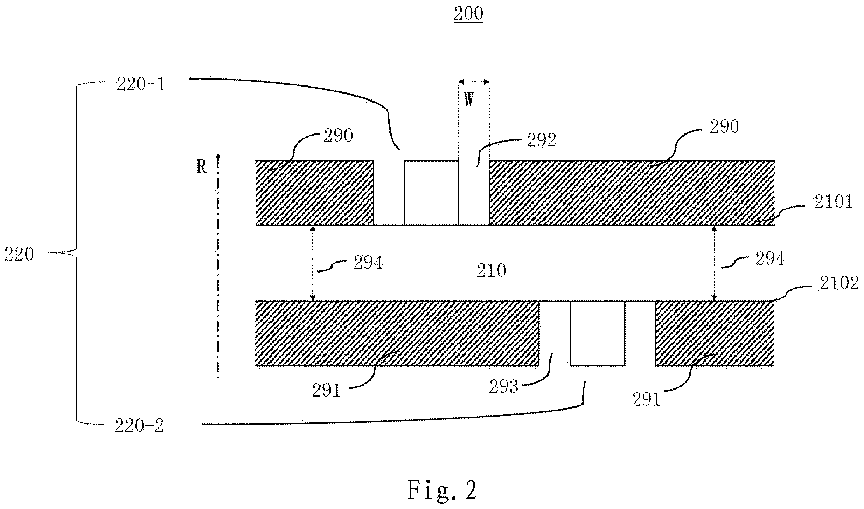

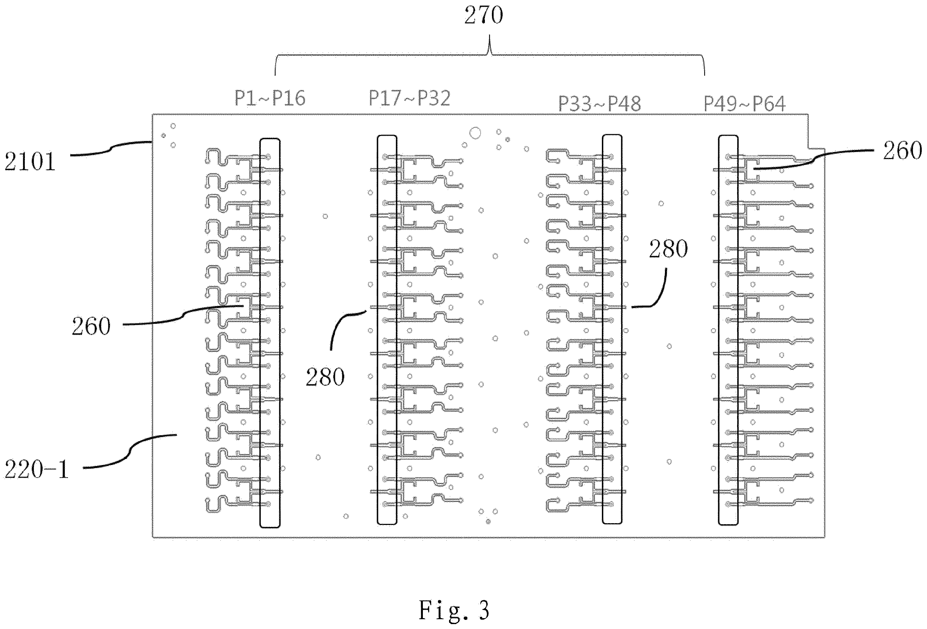

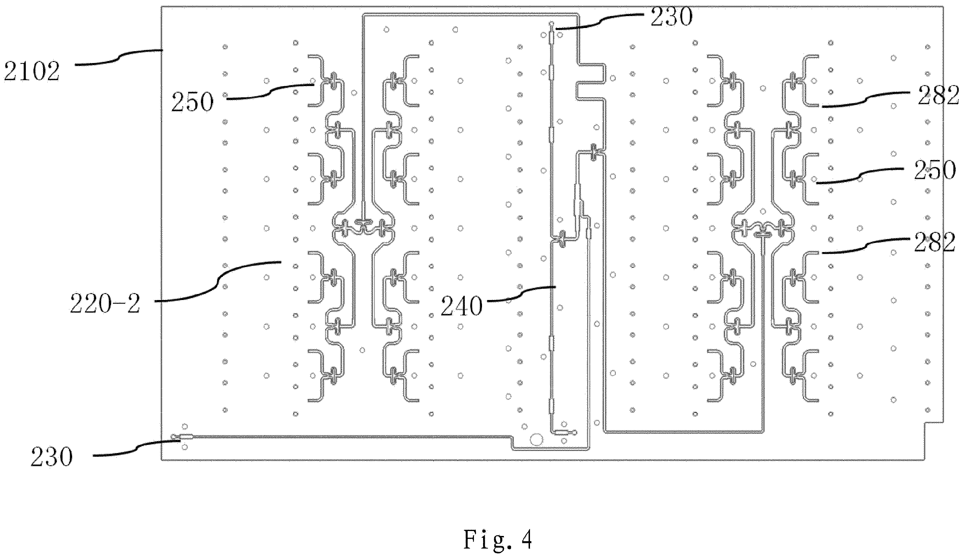

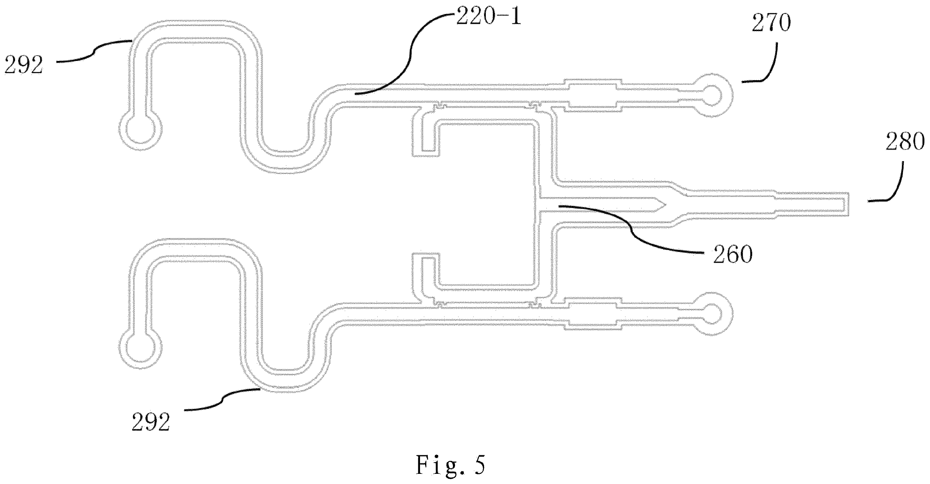

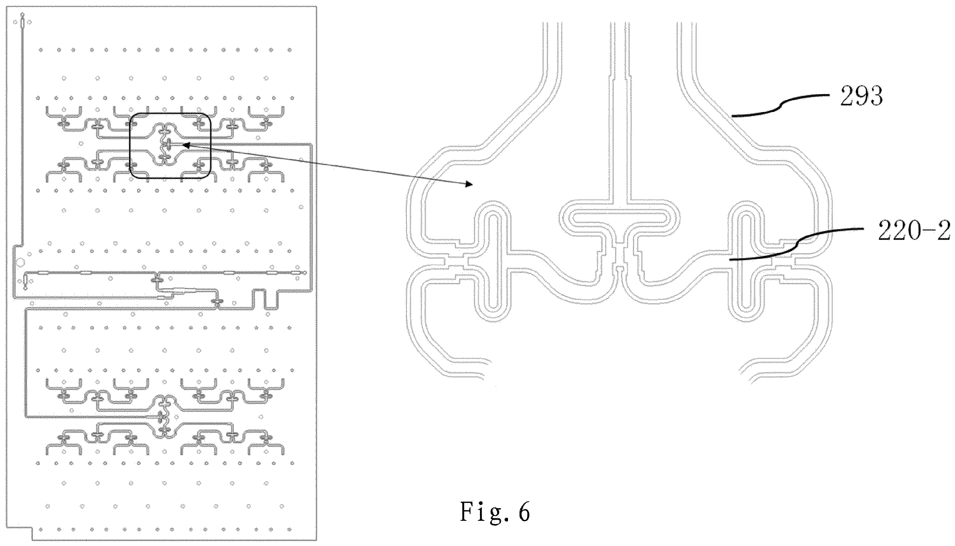

Next, the calibration device 200 according to some embodiments of the present invention will be described in more detail with reference to FIGS. 2 to 6, where FIG. 2 is a schematic partial sectional view of the calibration device 200 according to some embodiments of the present invention, FIG. 3 is a simplified schematic view showing a first portion 220-1 of the calibration circuit 220 on the calibration device 200, FIG. 4 is a simplified schematic view showing a second portion 220-2 of the calibration circuit 220 on the calibration device 200, FIG. 5 is an enlarged partial schematic view showing the first portion 220-1 of the calibration circuit 220, and FIG. 6 is a partial schematic view showing the second portion 220-2 of the calibration circuit 220.

Referring to FIG. 2, the calibration device 200 according to some embodiments of the present invention may be configured as one printed circuit board, such as a single-layer printed circuit board. In order to provide structural support, the calibration device 200 may be mounted on a baseplate 170 or a support plate (see FIG. 1). In the embodiment of FIG. 1, the baseplate 170 is advantageously disposed on the front side of the calibration device 200, so a majority of the pressing force caused by the RRU 300 may not be borne by the calibration device 200, but by the baseplate 170, whereby the structural safety of the calibration device 200 is guaranteed.

The calibration device 200 may include a dielectric substrate 210, and a metal pattern printed on the dielectric substrate 210. The metal pattern may include at least a portion of the calibration circuit 220. In some embodiments, the calibration device 200 may be configured as a single printed circuit board, and the printed circuit board may include an entirety of the calibration circuit 220. In other embodiments, the calibration device 200 may include two or more printed circuit boards, each of which may include a portion of the calibration circuit 220, and the individual portions of the calibration circuit may be in RF signal connection to each other using conductive connection devices, such as coaxial cables, coaxial connectors or electrical conductors.

The calibration circuit 220 may include a calibration port 230, transmission lines 240, power combiners 250 and couplers 260. The power combiners 250 may be configured as Wilkinson power combiners, and the couplers 260 may be configured as directional couplers. The calibration circuit 220 may be used to identify any unintended variations in the amplitude and/or phase of the RF signals that are input to the different RF ports 270 of the antenna 100.

Pursuant to some embodiments of the present invention, the calibration circuit 220 may be divided into at least two portions, wherein the first portion 220-1 of the calibration circuit 220 may be on the first major surface 2101 of the dielectric substrate 210, and the second portion 220-2 of the calibration circuit 220 may be on the second major surface 2102 of the dielectric substrate 210 opposite the first major surface 2101. The first major surface 2101 of the dielectric substrate 210 may face away from the RRU 300, whereas the second major surface 2102 of the dielectric substrate 210 may face the RRU 300. In this way, the first portion 220-1 of the calibration circuit 220 can be at least further away from the RRU 300, thereby reducing the interference of the RRU 300 to at least a portion of the calibration circuit 220. In addition, dividing the calibration circuit 220 into at least two portions can reduce the size of the calibration device 200 to thereby maintain the compact structure of the base station antenna 100.

In order to prevent the first portion 220-1 of the calibration circuit 220 from short-circuiting to the baseplate 170, a groove (not shown) may be provided in an area of the baseplate 170 corresponding to the first portion 220-1 of the calibration circuit 220, wherein the metal in the groove is removed to avoid direct electrical contact between the first portion 220-1 of the calibration circuit 220 and the baseplate 170. As there is only the need to provide a groove for a portion (i.e., the first portion 220-1) of the calibration circuit 220, the grooved area of the baseplate 170 is relatively limited, thereby ensuring high structural strength of the baseplate 170.

Referring to FIGS. 3 and 4, in some embodiments, the first portion 220-1 of the calibration circuit 220 may include the RF port 270 and the couplers 260. The second portion 220-2 of the calibration circuit 220 may include the calibration port 230 and the power combiner 250. An output end 280 of each coupler 260 may be electrically connected with an input end 282 of a power combiner 250 by means of a first conductive structure (not shown), such as vias or metal conductors. The design of the calibration circuit 220 according to FIGS. 3 and 4 is advantageous in that: Firstly, the RF ports 270 and the couplers 260 can be disposed away from the RRU 300: as the couplers 260 are relatively sensitive to radiant energy and near-field coupling, arranging of the RF ports 270 and the couplers 260 on a side facing away from the RRU 300 can reduce interference of the RRU 300 to the calibration circuit 220. Secondly, the first portion 220-1 of the calibration circuit 220 occupies only a part of the entire calibration circuit 220, so the grooved area on the baseplate 170 is relatively limited.

Pursuant to some embodiments of the present invention, in order to further reduce the interference of external interference signals to the calibration circuit 220, the calibration circuit 220 may be configured as a coplanar waveguide transmission line. Referring to FIGS. 2, 5 and 6, coplanar ground areas (hereinafter referred to as first coplanar ground areas 290) are printed on both sides of signal transmission lines of the first portion 220-1 of the calibration circuit 220, and coplanar ground areas (hereinafter referred to as second coplanar ground areas 291) are printed on both sides of signal transmission lines of the second portion 220-2 of the calibration circuit 220. The first coplanar ground areas 290 may be spaced apart from the first portion 220-1 of the calibration circuit 220 by a first slot 292, in which metalization is removed, and the first slot 292 may have a width W of any suitable size, for example, from 0.1 mm to 1 mm or from 0.2 mm to 0.5 mm. The second coplanar ground areas 291 may be spaced apart from the second portion 220-2 of the calibration circuit 220 by a second slot 293, in which metallization is removed, and the second slot 293 may have a width the same as or similar to that of the first slot 292. That is to say, the metal patterns on dielectric substrate may comprise coplanar ground areas surrounding the first portion 220-1 of the calibration circuit 220 and the second portion 220-2 of the calibration circuit 220 respectively.

The coplanar waveguide transmission lines include coplanar waveguide transmission lines without back metallization, and coplanar waveguide transmission lines with back metallization. In the embodiment of FIG. 2, the calibration circuit 220 may be at least partially configured as a coplanar waveguide transmission line with back metallization. Referring to FIG. 2, in a direction perpendicular to the first major surface 2101 of the dielectric substrate 210 (indicated by arrow R), the first portion 220-1 of the calibration circuit 220 and at least a portion of the first coplanar ground area 290 may be directly above at least a portion of the second coplanar ground area 291, and the second portion 220-2 of the calibration circuit 220 and at least a portion of the second coplanar ground area 291 may be directly below at least a portion of the first coplanar ground area 290. The first coplanar ground area 290 may be electrically connected to the second coplanar ground area 291 by means of a second conductive structure 294, such as a via or a metal conductor. Such coplanar waveguide transmission lines with back metallization are beneficial to further shield the calibration circuit 220 from external signals to improve the robustness and reliability of the calibration circuit 220.

In some embodiments, the RRU 300 may first input RF signals into the respective RF ports 270. Then, the calibration circuit 220 may extract, by means of the couplers 260, a small amount of each of the RF signals from the respective RF ports 270, and then combine these extracted signals to a calibration signal by means of the power combiners 250 and pass the calibration signal back to the RRU. The RRU 300 may adjust the amplitude and/or phase of the RF signals to be input to the RF ports 270 according to the calibration signal so as to provide an optimized antenna 100 beam.

It should be understood that the calibration device 200 and the calibration circuit 220 may include other suitable structural forms and/or operating modes, and are not limited to the embodiments described above.

In other embodiments, the first portion 220-1 of the calibration circuit 220 may further include, in addition to the RF port 270 and the coupler 260, other RF elements such as a matching impedance, a power combiner 250, or the like. The second portion 220-2 of the calibration circuit 220 may further include, in addition to the calibration port 230 and the power combiner 250, a matching impedance or the like.

In other embodiments, the calibration process may be performed in a reversed manner, and the power combiner 250 functions as a power divider at this time. In this case, the RRU 300 may first input a calibration signal to the calibration port 230. Then, the calibration signal is passed from the calibration port 230 via the respective transmission lines 240 to the power dividers which divide the calibration signal into a plurality of sub-components. The sub-components of the calibration signal are passed by the respective couplers 260 to the respective feed branches. The RF ports 270 may each extract a small portion of the calibration signal by means of the couplers 260. The RRU 300 may read the amplitude and/or phase of the RF signals that are electrically coupled from the calibration circuit 220 via the couplers 260 to the RF ports 270. Thus, the RRU may accordingly adjust the amplitude and/or phase of the RF signal to be input to the RF port 270 so as to provide an optimized antenna 100 beam.

Although exemplary embodiments of the present invention have been described, those skilled in the art should appreciate that many variations and modifications are possible in the exemplary embodiments without materially departing from the scope of the present invention. Accordingly, all such variations and modifications are intended to be included within the scope of the present invention, as defined by the claims.

## Claims

1. A calibration device (200) for an antenna (100), comprising:
a dielectric substrate (210); and
a metal pattern printed on the dielectric substrate,
wherein the metal pattern includes at least a portion of a calibration circuit (220),
wherein a first portion of the calibration circuit (220-1) is on a first major surface (2101) of the dielectric substrate, a second portion of the calibration circuit (220-2) is on a second major surface (2102) of the dielectric substrate that is opposite the first major surface, and the first portion and the second portion of the calibration circuit is constructed as a coplanar waveguide transmission line,
wherein the first portion of the calibration circuit comprises a plurality of first conductive traces and the second portion of the calibration circuit comprises a plurality of second conductive traces, and the metal pattern further includes a first coplanar ground area (290) printed on both sides of at least some of the first conductive traces and a second coplanar ground area (291) printed on both sides of at least some of the second conductive traces,
wherein the first portion of the calibration circuit includes at least one radio frequency, RF, port (270) and at least one coupler (260), and
wherein the second portion of the calibration circuit includes at least one calibration port (230) and at least one power combiner (250).

2. The calibration device according to claim 1, wherein the first coplanar ground area is spaced apart from the first conductive traces by a first slot (292), in which metallization is removed, and the second coplanar ground area is spaced apart from the second conductive traces by a second slot (293), in which metallization is removed.

3. The calibration device according to claim 2, wherein, with reference to a direction perpendicular to the first major surface of the dielectric substrate, the first portion of the calibration circuit is directly above at least a portion of the second coplanar ground area, and/or the second portion of the calibration circuit is directly below at least a portion of the first coplanar ground area.

4. The calibration device according to claim 2, wherein at least one of the first portion and the second portion of the calibration circuit is at least partially configured as a coplanar waveguide transmission line with back metallization.

5. The calibration device according to claim 2, wherein the first slot has a width between 0.1 mm and 1 mm, and the second slot has a width between 0.1 mm and 1 mm.

6. The calibration device according to any of claims 1-5, wherein the first portion of the calibration circuit is electrically connected to the second portion of the calibration circuit by a first conductive structure.

7. The calibration device according to claim 6, wherein the first conductive structure includes a via or a metal conductor.

8. The calibration device according to claim 1, wherein the first coplanar ground area is electrically connected to the second coplanar ground area by a second conductive structure (294).

9. The calibration device according to claim 8, wherein the second conductive structure includes a via or a metal conductor.

10. An antenna (100) comprising the calibration device (200) according to any of claims 1-9, wherein the antenna comprises a base station antenna that includes:
a reflector (120),
an antenna array (140) on a front side of the reflector; and
a baseplate (170),
wherein the calibration device and the baseplate are provided on a rear side of the reflector, and the calibration device is mounted on the baseplate.

11. The antenna according to claim 10, wherein the baseplate includes a groove, in which metal is removed, and wherein the first portion of the calibration circuit overlaps the groove to avoid direct electrical contact between the first portion of the calibration circuit and the baseplate.

12. The antenna according to any of claims 10-11, wherein the calibration device is configured as a single-layer printed circuit board including only one dielectric substrate between the first portion and the second portion of the calibration circuit.

13. The antenna according to any of claims 10-12, wherein a remote radio unit (300) is installed on a rear side of the base station antenna, and wherein the first major surface of the dielectric substrate faces away from the remote radio unit and the second major surface of the dielectric substrate faces toward the remote radio unit.

## Patentansprüche

1. Kalibriervorrichtung (200) für eine Antenne (100), umfassend:
ein dielektrisches Substrat (210); und
ein auf das dielektrische Substrat gedrucktes Metallmuster,
wobei das Metallmuster zumindest einen Teil einer Kalibrierschaltung (220) beinhaltet,
wobei sich ein erster Abschnitt der Kalibrierschaltung (220-1) auf einer ersten Hauptfläche (2101) des dielektrischen Substrats befindet, sich ein zweiter Abschnitt der Kalibrierschaltung (220-2) auf einer zweiten Hauptfläche (2102) des dielektrischen Substrats befindet, die der ersten Hauptfläche gegenüberliegt, und der erste Abschnitt und der zweite Abschnitt der Kalibrierschaltung als koplanare Wellenleiterübertragungsleitung aufgebaut sind,
wobei der erste Abschnitt der Kalibrierschaltung eine Vielzahl von ersten Leiterbahnen umfasst und der zweite Abschnitt der Kalibrierschaltung eine Vielzahl von zweiten Leiterbahnen umfasst und das Metallmuster ferner eine erste koplanare Massefläche (290), die auf beiden Seiten von zumindest einigen der ersten Leiterbahnen gedruckt ist, und eine zweite koplanare Massefläche (291), die auf beiden Seiten von zumindest einigen der zweiten Leiterbahnen gedruckt ist, beinhaltet,
wobei der erste Teil der Kalibrierschaltung zumindest einen Hochfrequenz (HF)-Anschluss (270) und zumindest einen Koppler (260) beinhaltet, und wobei der zweite Teil der Kalibrierschaltung zumindest einen Kalibrieranschluss (230) und zumindest einen Leistungskombinierer (250) beinhaltet.

2. Kalibriervorrichtung nach Anspruch 1, wobei die erste koplanare Massefläche von den ersten Leiterbahnen durch einen ersten Schlitz (292) beabstandet ist, in dem die Metallisierung entfernt ist, und die zweite koplanare Massefläche von den zweiten Leiterbahnen durch einen zweiten Schlitz (293) beabstandet ist, in dem die Metallisierung entfernt ist.

3. Kalibriervorrichtung nach Anspruch 2, wobei, bezogen auf eine Richtung senkrecht zu der ersten Hauptfläche des dielektrischen Substrats, sich der erste Abschnitt der Kalibrierschaltung direkt über zumindest einem Abschnitt der zweiten koplanaren Massefläche befindet und/oder sich der zweite Abschnitt der Kalibrierschaltung direkt unter zumindest einem Abschnitt der ersten koplanaren Massefläche befindet.

4. Kalibriervorrichtung nach Anspruch 2, wobei zumindest einer von dem ersten Abschnitt und dem zweiten Abschnitt der Kalibrierschaltung zumindest teilweise als eine koplanare Wellenleiterübertragungsleitung mit Rückseitenmetallisierung ausgestaltet ist.

5. Kalibriervorrichtung nach Anspruch 2, wobei der erste Schlitz eine Breite zwischen 0,1 mm und 1 mm aufweist und der zweite Schlitz eine Breite zwischen 0,1 mm und 1 mm aufweist.

6. Kalibriervorrichtung nach einem der Ansprüche 1-5, wobei der erste Abschnitt der Kalibrierschaltung durch eine erste leitende Struktur elektrisch mit dem zweiten Abschnitt der Kalibrierschaltung verbunden ist.

7. Kalibriervorrichtung nach Anspruch 6, wobei die erste leitende Struktur einen Durchgangs- oder einen Metallleiter beinhaltet.

8. Kalibriervorrichtung nach Anspruch 1, wobei die erste koplanare Massefläche durch eine zweite leitende Struktur (294) elektrisch mit der zweiten koplanaren Massefläche verbunden ist.

9. Kalibriervorrichtung nach Anspruch 8, wobei die zweite leitende Struktur einen Durchgangs- oder einen Metallleiter beinhaltet.

10. Antenne (100), welche die Kalibriervorrichtung (200) gemäß einem der Ansprüche 1-9 umfasst, wobei die Antenne eine Basisstationsantenne umfasst, die Folgendes beinhaltet:
einen Reflektor (120),
eine Antennenanordnung (140) auf einer Vorderseite des Reflektors; und
eine Grundplatte (170),
wobei die Kalibriervorrichtung und die Grundplatte auf einer Rückseite des Reflektors vorgesehen sind und die Kalibriervorrichtung auf der Grundplatte montiert ist.

11. Antenne nach Anspruch 10, wobei die Grundplatte eine Nut beinhaltet, in der Metall entfernt ist, und wobei der erste Abschnitt der Kalibrierschaltung die Nut überlappt, um einen direkten elektrischen Kontakt zwischen dem ersten Abschnitt der Kalibrierschaltung und der Grundplatte zu vermeiden.

12. Antenne nach einem der Ansprüche 10-11, wobei die Kalibriervorrichtung als eine einschichtige Leiterplatte ausgestaltet ist, die nur ein einziges dielektrisches Substrat zwischen dem ersten Abschnitt und dem zweiten Abschnitt der Kalibrierschaltung beinhaltet.

13. Antenne nach einem der Ansprüche 10-12, wobei eine entfernte Funkeinheit (300) auf einer Rückseite der Basisstationsantenne installiert ist, und wobei die erste Hauptfläche des dielektrischen Substrats von der entfernten Funkeinheit weg weist und die zweite Hauptfläche des dielektrischen Substrats der entfernten Funkeinheit zugewandt ist.

## Revendications

1. Dispositif d'étalonnage (200) pour une antenne (100), comprenant :
un substrat diélectrique (210) ; et
un motif métallique imprimé sur le substrat diélectrique,
dans lequel le motif métallique comprend au moins une portion d'un circuit d'étalonnage (220),
dans lequel une première portion du circuit d'étalonnage (220-1) est sur une première surface principale (2101) du substrat diélectrique, une deuxième portion du circuit d'étalonnage (220-2) est sur une deuxième surface principale (2102) du substrat diélectrique qui est opposée à la première surface principale, et la première portion et la deuxième portion du circuit d'étalonnage sont construites comme une ligne de transmission de guide d'ondes coplanaire,
dans lequel la première portion du circuit d'étalonnage comprend une pluralité de premières traces conductrices et la deuxième portion du circuit d'étalonnage comprend une pluralité de deuxièmes traces conductrices, et le motif métallique comprend en outre une première zone de masse coplanaire (290) imprimée sur les deux côtés d'au moins certaines des premières traces conductrices et une deuxième zone de masse coplanaire (291) imprimée sur les deux côtés d'au moins certaines des deuxièmes traces conductrices,
dans lequel la première portion du circuit d'étalonnage comprend au moins un port radiofréquence, RF, (270) et au moins un coupleur (260), et dans lequel la deuxième portion du circuit d'étalonnage comprend au moins un port d'étalonnage (230) et au moins un combineur de puissance (250).

2. Dispositif d'étalonnage selon la revendication 1, dans lequel la première zone de masse coplanaire est espacée des premières pistes conductrices par une première fente (292), dans laquelle la métallisation est éliminée, et la deuxième zone de masse coplanaire est espacée des deuxièmes pistes conductrices par une deuxième fente (293), dans laquelle la métallisation est éliminée.

3. Dispositif d'étalonnage selon la revendication 2, dans lequel, en référence à une direction perpendiculaire à la première surface principale du substrat diélectrique, la première portion du circuit d'étalonnage est directement au-dessus d'au moins une portion de la deuxième zone de masse coplanaire, et/ou la deuxième portion du circuit d'étalonnage est directement au-dessous d'au moins une portion de la première zone de masse coplanaire.

4. Dispositif d'étalonnage selon la revendication 2, dans lequel au moins l'une parmi la première portion et la deuxième portion du circuit d'étalonnage est au moins partiellement configurée comme une ligne de transmission de guide d'onde coplanaire avec métallisation d'endossage.

5. Dispositif d'étalonnage selon la revendication 2, dans lequel la première fente a une largeur entre 0,1 mm et 1 mm, et la deuxième fente a une largeur entre 0,1 mm et 1 mm.

6. Dispositif d'étalonnage selon l'une quelconque des revendications 1 à 5, dans lequel la première portion du circuit d'étalonnage est connectée électriquement à la deuxième portion du circuit d'étalonnage par une première structure conductrice.

7. Dispositif d'étalonnage selon la revendication 6, dans lequel la première structure conductrice comprend un trou d'interconnexion ou un conducteur métallique.

8. Dispositif d'étalonnage selon la revendication 1, dans lequel la première zone de masse coplanaire est connectée électriquement à la deuxième zone de masse coplanaire par une deuxième structure conductrice (294).

9. Dispositif d'étalonnage selon la revendication 8, dans lequel la deuxième structure conductrice comprend un trou d'interconnexion ou un conducteur métallique.

10. Antenne (100) comprenant le dispositif d'étalonnage (200) selon l'une quelconque des revendications 1 à 9, dans laquelle l'antenne comprend une antenne de station de base qui comprend :
un réflecteur (120),
un réseau d'antennes (140) sur un côté avant du réflecteur ; et
une plaque de base (170),
dans laquelle le dispositif d'étalonnage et la plaque de base sont fournis sur un côté arrière 15 du réflecteur, et le dispositif d'étalonnage est monté sur la plaque de base.

11. Antenne selon la revendication 10, dans laquelle la plaque de base comprend une rainure, dans laquelle du métal est éliminé, et dans laquelle la première portion du circuit d'étalonnage chevauche la rainure pour éviter un contact électrique direct entre la première portion du circuit d'étalonnage et la plaque de base.

12. Antenne selon l'une quelconque des revendications 10 et 11, dans laquelle le dispositif d'étalonnage est configuré sous la forme d'une carte de circuit imprimé monocouche comprenant seulement un substrat diélectrique entre la première portion et la deuxième portion du circuit d'étalonnage.

13. Antenne selon l'une quelconque des revendications 10 à 12, dans laquelle une unité radio distante (300) est installée sur un côté arrière de l'antenne de station de base, et dans laquelle la première surface principale du substrat diélectrique est tournée à l'opposé de l'unité radio distante et la deuxième surface principale du substrat diélectrique est tournée vers l'unité radio distante.
